Europäisches Patentamt

**European Patent Office**

Office européen des brevets

(11) Publication number: **0 121 866**
**A2**

## EUROPEAN PATENT APPLICATION

(21) Application number: **84103466.3**

(22) Date of filing: **29.03.84**

(51) Int. Cl.³: **G 06 K 11/00**

(30) Priority: **08.04.83 US 483331**

(43) Date of publication of application: **17.10.84**
**Bulletin 84/42**

(84) Designated Contracting States: **DE FR GB NL**

(71) Applicant: **TEKTRONIX, INC., Tektronix Industrial Park D/S Y3-121 4900 S.W. Griffith Drive P.O. Box 500, Beaverton Oregon 97077 (US)**

(72) Inventor: **Mutton, Jon C., 18330 S.W. River Road, Milwaukie Oregon 97222 (US)**
Inventor: **Brown, David J., 21105 S.W. 85th, Tualatin Oregon 97062 (US)**
Inventor: **Leith, Robert H., 1444 S.W. Brookwood, Hillsboro Oregon 97123 (US)**

(74) Representative: **Strasse, Joachim et al, Strasse & Stoffregen, Patentanwälte Zweibrückenstrasse 17, D-8000 München 2 (DE)**

(54) **Keyboard joyswitch.**

(57) The present invention is a joyswitch which has a polygonally shaped switch plate having an even number of equilateral sides. Adjacent alternate sides of the switch plate there is a directional switch, which if activated by depressing the side of the switch plate thereabove will cause a selected indicia on a CRT screen to move along the directional vector associated with that switch in the firmware of the CRT device. If pressure is applied to a side of the switch plate not directly above one of the directional switches the two directional switches adjacent the depressed side will be activated causing the selected indicia on a CRT screen to move along a vector which is the geometric sum of the directional vectors associated with the two activated switches in the firmware of the CRT device.

EP 0 121 866 A2

KEYBOARD JOYSWITCH

Background of the Invention

This invention is related to cursor controls for CRT displays, namely joystick controls for movement of the cursor to a desired position.

There are two types of prior art joysticks. One type has two linear potentiometers mounted at 90° to each other with each coupled to the end of the joystick shaft. One of the potentiometers is connected to control the up and down motion of the cursor and the other the left and right motion of the cursor on the CRT. As the shaft is moved manually from one position to another, the resistance of one or both potentiometers varies proportionally to that movement with respect to the orientation of each potentiometer. With the joystick the cursor can be relocated to any position on the CRT screen with its position being determined by the effective resistant of each potentiometer for the new joystick shaft position.

The second type of joystick is one which incorporates four directional switches, one each for the up, down, left and right directions. As one of these switches is closed, by movement of the joystick shaft, the cursor on the CRT will move in that direction at a rate preset in the CRT hardware. When the cursor reaches the desired location the user releases the joystick shaft, with the shaft returning to the center home position allowing the activated directional switch to open. The cursor remains in its new position until repositioned by means of the joystick or the CRT electronics. With some prior art joysticks it is possible to close two adjacent directional switches to cause the cursor to move diagonally across the face of the CRT. However, to achieve that diagonal motion of the cursor, the user must develop a sense of "feel" for the joystick. There is no positive, fool-proof joystick mechanism to assure the diagonal movement when the user requires it; it is a hit and miss operation at best.

The control shafts of prior art joysticks, typically, are also either very bulky and stiff, or so small the user cannot effectively hold onto it and control it. It would be desirable to have a joystick type control which would allow positive, fool-proof control for graphic input, cursor control, crosshair control and scrolling for computer terminals or personal computers while being able to achieve that result without first developing a "feel" for the device before being able to move the cursor in any desired direction. The present invention disclosed herein represents such a control which can be substituted for prior art thumbwheels, joysticks, trackballs and cursor control keys.

## Summary of the Invention

In accordance with the preferred embodiment, the keyboard joyswitch of the present invention provides a switch plate defining a polygonal outline with a selected number of equilateral sides, and a multiplicity of directional switches adjacent alternate sides of the switch plate with the switch plate actuating at most two directional switches when pressure is applied to one side thereof. The invention further includes a base plate to which the switch plate is done so that it remains biased in a neutral position (i.e. no switches activated) so that only a single side of the switch plate may be depressed at any one time to achieve a positive, fool-proof selection of the direction vector along which the selected indicia on the CRT screen may be moved. In most current applications

0121866

the switch plate will be octagonal and there will be four directional switches to provide eight direction vectors (the four vectors assigned to the individual switches and the geometric sum of the vectors assigned to adjacent switches) along which the selected indicia may be moved on the CRT screen.

## Description of the Drawings

Figure 1 is a top view of the keyboard joyswitch of the present invention.

Figure 2 is a side view of the keyboard joyswitch of Figure 1.

## Description of the Preferred Embodiment

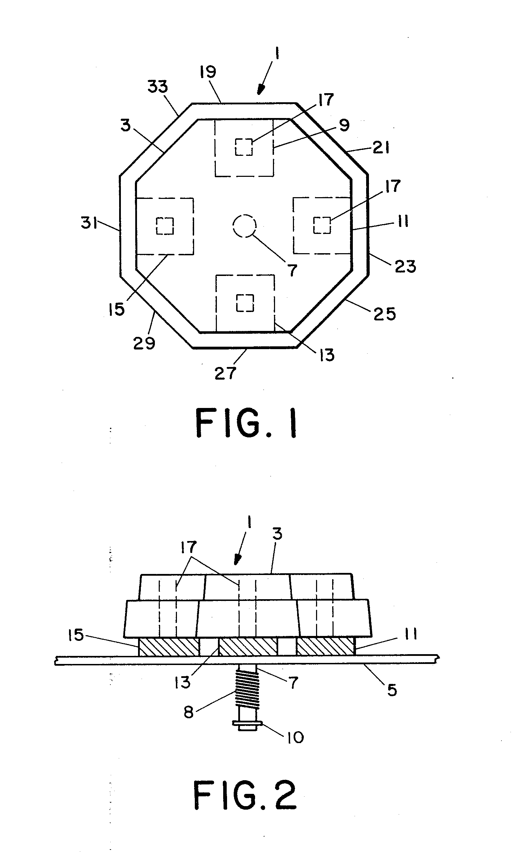

In Figures 1 and 2 there is shown a keyboard joyswitch 1 of the present invention. The joyswitch 1 includes an octagonal switch plate 3 mounted on a printed circuit board 5. The switch plate 3 has five shafts molded to its underside, four switch closure shafts 17 and a central mounting shaft 7.

Switch plate 3 mounts to the printed circuit board 5 with shaft 7 extended through the printed circuit board 5. Spring 8 is retained on shaft 7 by retaining ring 10 and is partially compressed between ring 10 and board 5 to bias switch plate 3 in the neutral position. The four switch closure shafts 17 are molded adjacent the center of alternating edges of switch plate 3 and are disposed adjacent directional switches 9, 11, 13 and 15 on printed circuit board 5.

| Switch Plate 3 Edge Depressed | Switches Closed | Cursor Movement Direction |
|---|---|---|
| 19 | 9 | Up |
| 21 | 9, 11 | 45° Up to Right |
| 23 | 11 | Right |
| 25 | 11, 13 | 45° Down to Right |
| 27 | 13 | Down |
| 29 | 13, 15 | 45° Down to Left |
| 31 | 15 | Left |
| 33 | 15, 9 | 45° Up to Left |

TABLE 1

Switches 9, 11, 13 and 15 for this implementation can be a membrane or "oil can" type switch which is activated by lateral motion from above. As the user depresses edge 19 of switch plate 3, shaft 17 on that edge makes contact with and closes switch 9. If edge 21 is depressed, then both switches 9 and 11 are closed. If switches 9, 11, 13 and 15 are designated to control the up, right, down and left motion of the cursor, respectively, the switch closures and cursor direction for the depression of the eight different edges of switch plate 3 are as indicated in Table 1.

The octagonal shape of switch plate 3 provides a positive fool-proof means for selecting the direction of cursor movement. The shape of switch plate 3 and the method of mounting same make it impossible to depress more than one edge at a time, thus eliminating the necessity of getting a "feel" of the controller to be able to repeatedly select the desired direction. The smooth surface of switch plate 3 eliminates another problem that develops from long usage of a standard joystick - hand cramps from grasping the stick. With the joyswitch 1 of the present invention the user can control switch plate 3 in many different ways with the tips of one or more fingers and they may be alternated during use to minimize the possibility of hand cramps.

The foregoing description is of a joyswitch device for positively controlling cursor movement in eight directions using only four swtiches. It should be apparent to one skilled in the art that this idea can be extended to provide additional control directions through the use of other polygonal shapes of the switch plate (i.e., five switches and ten sides for ten directions, six switches and twelve sides for twelve directions).

0121866

We claim:

1. A joyswitch apparatus for positively controlling the direction of movement of a selected indicia on a CRT screen, said apparatus comprising:
a switch plate defining a polygonal outline having an even selected number of equilateral sides; and
a multiplicity of directional switches adjacent alternate sides of the switch plate;
said switch plate actuating at most two directional switches when pressure is applied to one of its sides.

2. A joyswitch apparatus as in claim 1 further comprises base plate means for interfacing with said directional switches and said switch plate.

3. A joyswitch apparatus as in claim 2 wherein:
said switch plate includes a central mounting shaft extending outward from the lower surface thereof for passing through said base plate means; and
said joyswitch apparatus further comprises retaining means for attachment to the central mounting shaft of the switch plate below the base plate means to bias said switch plate in a neutral position and to permit the tilting of the switch plate normally to one of the sides of the switch plate in response to pressure applied to that side.

4. A joyswitch apparatus as in claim 3 wherein said switch plate also includes a multiplicity of switch closure shafts extending downward from the under side thereof adjacent to alternate sides of the switch plate to communicate the downward movement of the side of the switch plate to the adjacent directional switches.

5. A joyswitch apparatus as in claim 3 wherein said retaining means includes:

a retaining ring affixed to the free end of the central mounting shaft; and

a coil spring encircling the central mounting shaft of the switch means and being partially compressed between said retaining ring and the lower surface of the base plate means.

6. A joyswitch apparatus as in claim 5 wherein said switch plate also includes a multiplicity of switch closure shafts extending downward from the underside thereof adjacent to alternate sides of the switch plate to communicate the downward movement of the side of the switch plate to the adjacent directional switches.

7. A joyswitch apparatus as in claim 6 wherein:

said switch plate is octagonal; and

there are four directional switches, one each for controlling the up, down, left and right movement of the selected indicia on the CRT screen.

8. A joyswitch apparatus as in claim 3 wherein pressure applied to a side of the switch plate directly associated with a directional switch will cause the indicia on the CRT screen to move along the direction vector associated with that switch, and pressure applied to a side of the switch plate between two directional switches will cause the indicia on the CRT screen to move in a direction which is a geometric sum of the direction vectors associated with the two switches actuated.

0121866

FIG. 1

FIG.2